# EUROPEAN PATENT SPECIFICATION

(11) **EP 4 545 894 B1**
(45) Date of publication and mention of the grant of the patent: **15.07.2026**
(21) Application number: 24207356.7
(22) Date of filing: 18.10.2024
(51) Int. Cl.: F28D 9/00, F28F 3/02, B21D 53/02, F28F 21/08, B23K 1/00, F25J 1/02, B23K 1/19, B23K 1/20, B23K 101/14, B23K 103/14, F25J 5/00

(54) **TITANIUM OR TITANIUM ALLOY HEAT EXCHANGER**
WÄRMETAUSCHER AUS TITAN ODER TITANLEGIERUNG
ECHANGEUR DE CHALEUR EN TITANE OU ALLIAGE DE TITANE

(30) Priority: 27.10.2023 FR 2311737
(43) Date of publication of application: 30.04.2025
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: WAGNER, Marc, 78350 Jouy en Josas (FR); RAMENATTE, Nicolas, 78350 Jouy-En-Josas (FR)
(74) Representative: Air Liquide

(56) References cited:
- EP-B1- 0 990 111
- WO-A1-2019/025689
- US-A1- 2001 054 500
- US-A1- 2010 263 823
- US-A1- 2020 340 761
- US-A1- 2021 170 535
- US-A1- 2023 221 082

## Description

The present invention concerns a plate-fin heat exchanger.

The present invention is particularly applicable in the field of cryogenic gas separation, in particular cryogenic air separation (ASU) operated for the production of gaseous oxygen under pressure. In particular, the present invention can be applied to a heat exchanger which vaporizes a refrigerant, e.g. liquid oxygen, by heat exchange with a calorigenic fluid, e.g. nitrogen gas. If the heat exchanger is located in the vessel of a distillation column, it can be a thermosyphon vaporizer-condenser in which the exchanger is immersed in a liquid oxygen bath flowing down the column, or a falling-film vaporizer fed directly by the liquid falling from the column and/or by a recirculation pump.

The present invention can also be applied to a heat exchanger which vaporizes at least one liquid-gas mixture flow, in particular a multi-component mixture flow, e.g. a hydrocarbon mixture, by heat exchange with at least one other fluid, e.g. natural gas.

The present invention may also find application in the field of hydrogen liquefaction. In particular, the invention can be applied to a heat exchanger, in particular a catalytic exchanger, in which a flow of hydrogen gas is cooled, or even liquefied in whole or in part, by heat exchange with a flow of refrigerant fluid, as well as to the cooling and/or liquefaction process implementing said exchanger.

The present invention also applies to on-board cryogenic exchangers in which the fluids circulating in the exchanger may comprise neon, nitrogen, hydrogen, helium, oxygen, argon, carbon monoxide or methane.

In particular, one or more exchangers according to the invention can be used in a cryogenic refrigeration device, notably a cryogenic refrigeration device using a Brayton cycle or an Ericsson cycle.

One technology used is that of aluminum exchangers with plates and fins or brazed waves, which make it possible to obtain very compact devices offering a large exchange surface. These exchangers comprise separator plates and a stack of passages for the different fluids to be exchanged. Heat exchange structures, generally corrugated structures or waves formed by a succession of fins or wave legs, are inserted between the plates, delimiting channels in the passages through which the fluids flow and forming additional heat exchange surfaces. Heat exchangers according to the preamble of claim 1 are known for example from EP0990111B1.

The role of heat exchange structures is to increase the contact surface between the fluids and the exchanger walls in order to promote heat exchange. The performance of a heat exchanger is linked to the heat exchange coefficient of the heat exchange structures in contact with the fluids. The heat exchange coefficient of a structure depends in particular on the geometry of the structure, the nature of the material of which it is made, the porosity of this material, its roughness and the flow regime of the fluids.

Improving the thermal performance of a heat exchanger with constant volume and temperature difference can be achieved in particular by increasing the exchange surface area and/or by increasing the heat exchange coefficient. The increase in exchange surface is generally linked to the density of the corrugated spacer element used, generally expressed in terms of the number of fins per unit length.

Another performance criterion for a heat exchanger is its on-board suitability. For example, cryogenic refrigeration systems on board satellites, such as Brayton cycle refrigeration machines, require heat exchangers that combine high energy efficiency with low weight. The exchangers used for this type of application are generally tubular exchangers of the calandria-tube type comprising microtubes, typically with an external diameter of around 0.5 mm. The advantage of microtubes lies in their small hydraulic diameter, enabling very high heat exchange coefficients to be achieved, thanks to a Reynolds number (noted Re) that becomes laminar and a constant Nusselt number (noted Nu) for a laminar Reynolds number.

However, shell-and-tube heat exchangers are not entirely satisfactory. They only allow two fluids to circulate, which may not be sufficient for certain processes. In addition, these primary surface exchangers offer few degrees of freedom to vary the exchange surface according to the characteristics of the fluids involved. Finally, the need to weld the tubes into the tube plate fixed to the end of the calender can lead to a complex and time-consuming manufacturing process.

The aim of the present invention is to solve some or all of the above-mentioned problems, and in particular to provide a heat exchanger with improved embarkability or limited footprint and operating flexibility.

The solution according to the invention is then a heat exchanger of the plate and fin type configured to bring into heat exchange relationship at least one refrigerant fluid and at least one heat-originating fluid, said exchanger comprising a plurality of plates arranged parallel to each other and to a longitudinal direction so as to define between said plates a plurality of passages adapted for the flow of the refrigerant fluid or the heat-originating fluid along the longitudinal direction, finned heat exchange structures being arranged within at least part of the passages, the plates and heat exchange structures being formed wholly or partly of titanium or a titanium alloy and characterized in that the plates and heat exchange structures are assembled by brazing using a brazing agent comprising a eutectic alloy.

In some cases, the exchanger according to the invention may comprise one or more of the technical features given below.

All plates and heat exchange structures are made of titanium or a titanium alloy.

The exchanger comprises inlet or outlet manifolds configured to introduce or discharge refrigerant or heat transfer fluid into or from the passages, said inlet or outlet manifolds being formed wholly or partly of titanium or a titanium alloy.

The titanium alloy comprises at least 50% by weight of titanium, preferably at least 90% by weight of titanium, and even more preferably at least 95% by weight of titanium.

The brazing agent can preferably comprise a eutectic copper-silver alloy. In some instances the brazing agent is exclusively made of a eutectic alloy, and preferably exclusively of a eutectic copper-silver alloy without any other metal or compound in the brazing agent.

The heat-exchanger structures and the plates are brazed together using a brazing agent, the heat-exchanger structures and/or the plates being wholly or partially surface-coated with a material other than nickel, a nickel alloy or the brazing agent, in particular a material comprising nickel.

The heat exchange structures are in the form of corrugated products comprising at least one corrugation with wave crests and wave bases arranged against the plates and connected alternately by fins, said fins following one another in a corrugation direction of the heat exchange structures.

Said at least one corrugation has a fin density, defined as the number of fins per unit length measured along the direction of corrugation, of at least 30 fins per inch or fins per inch (1 inch=2.54 centimeters), preferably a fin density of at most 80 fins per inch (1 inch = 2.54 centimeters), even more preferably a fin density of between 40 and 70 fins per inch (1 inch = 2.54 centimeters).

The heat exchange structures have a thickness ranging from 0.03 to 0.1 mm.

The passages have a height ranging from 1 to 3 mm, said height being defined as the distance between two adjacent plates measured orthogonally to the plates.

Sheet thicknesses can range from 0.05 to 0.4 mm.

The exchanger comprises a body formed by the stack of plates (2), said body having a length, measured parallel to the longitudinal direction (z), less than or equal to 1 m, preferably between 0.1 and 0.8 m and/or said body having a width, measured parallel to the lateral direction (x), of less than or equal to 0.1 m, preferably between 0.02 and 0.08 m, and/or said body has a height, measured orthogonally to the longitudinal (z) and lateral (x) directions, of less than 0.06 m, preferably between 0.01 and 0.05 m.

The passages are delimited by closing bars arranged between the plates and formed in whole or in part from titanium or a titanium alloy.

The closing bars have a square, rectangular or U-shaped cross-section.

According to another aspect, the invention relates to an air separation unit or hydrogen liquefaction plant comprising at least one heat exchanger according to the invention, the heat exchanger comprising inlet or outlet manifolds for distributing or discharging into or from exchanger passages liquid oxygen as refrigerant and gaseous nitrogen as heat transfer fluid.

In addition, the invention relates to a cryogenic refrigeration device for transferring heat from a cold source to a hot source via a working fluid circulating in a closed working circuit, the working circuit comprising in series: a substantially isothermal working fluid compression portion, a substantially isobaric working fluid cooling portion, a substantially isothermal working fluid expansion portion and a substantially isobaric working fluid reheating portion, the compression portion of the working circuit comprising at least two compressors arranged in series and at least one compressed working fluid cooling exchanger arranged at the outlet of each compressor, the expansion portion of the working circuit comprising at least one expansion turbine and at least one exchanger for reheating the expanded working fluid, wherein the exchanger for cooling the compressed working fluid and/or the exchanger for reheating the expanded working fluid is according to the invention and comprises inlet or outlet manifolds for distributing or discharging into or from exchanger passages the compressed working fluid as a heat-generating fluid or the expanded working fluid as a refrigerant.

Furthermore, the invention relates to the use of an exchanger according to the invention in which said at least one heat transfer fluid and/or said at least one refrigerant fluid comprises at least one of: neon, krypton, xenon, nitrogen, argon, oxygen, hydrogen, helium, carbon monoxide, carbon dioxide, methane.

The present invention will now be better understood thanks to the following description, given only as a non-limiting example and made with reference to the figures mentioned below.
[Fig.1] is a partial three-dimensional view of an exchanger according to one embodiment of the invention.
[Fig.2] is a cross-sectional view of a heat exchange structure in an exchanger passage according to one embodiment of the invention.
[Fig.3] is a schematic view illustrating the structure and operation of an example of a refrigeration device according to the invention.

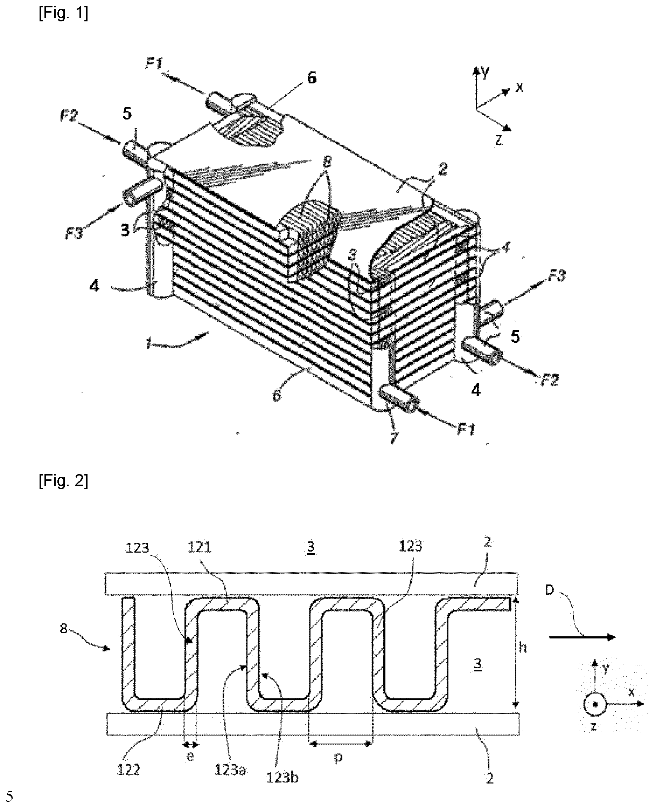

As shown in [Fig. 1], a heat exchanger according to the invention comprises a set of plates 2 arranged parallel to one another with spacing and thus forming several series of passages 3 of parallelepipedal and flat shape for the flow of at least one refrigerant and at least one heat transfer fluid to be brought into indirect heat exchange relationship via the plates 2.

The plates 2 are stacked parallel to one another and in a stacking direction y. They extend in two dimensions, length and width, respectively along the longitudinal direction z and the lateral direction x. The plates 4 thus define a plurality of passages 3 for fluid flow generally parallel to the longitudinal direction z. Preferably, each passage 3 has a flat, parallelepiped shape.

Over most of their height, the passages 3 contain heat exchange structures 8 comprising, in this example, corrugated sheets, also known as exchange waves. These structures may or may not be perforated. These exchange structures 8 are preferably of the vertical generatrix type, or so-called "easyway" arrangement. In this case, the corrugated exchange structures 8 have, in operation, an overall corrugation direction that is orthogonal to the longitudinal direction z and parallel to the lateral direction x. The exchange structures are soldered to the plates 2.

It is also conceivable that the heat exchanger's heat exchange structures have different directions, dimensions and/or corrugation shapes to those of the embodiments described in the present application.

At the end of the passages 3, the heat exchange structures 8 can be extended by so-called distribution waves to distribute the fluids in the respective passages. All or some of the passages of exchanger 1 may be provided with at least one heat exchange structure 8. Along their edges, the passages 3 are respectively closed by closing bars 6. The plates 2 are spaced apart by these bars 6, which do not completely close the passages 3, but leave inlet and outlet openings. The inlets and outlets of each passage for the circulation of the same fluid are connected by manifolds 4, 7 fitted with tubes 5 for the introduction and discharge of the fluid.

According to the invention, the plates 2 and the heat exchange structures 8 are made entirely or partly of titanium or a titanium alloy.

Firstly, thanks to its plate structure, the exchanger can bring more than two fluids into heat exchange contact, making it a compact device offering a large exchange surface and more flexible operation than a tubular heat exchanger.

Furthermore, titanium and its alloys are characterized by low densities, lower than those of aluminum or steel, enabling the manufacture of lighter parts.

Titanium and its alloys also have good mechanical strength, which is advantageous when the components are subjected to mechanical stress during transport or use in on-board devices. In addition, titanium and its alloys have good corrosion resistance, making them suitable for use in corrosive atmospheres, particularly in the presence of air or oxygen.

Another advantage is that titanium or its alloys have a lower thermal conductivity than aluminum or aluminum alloys, particularly at low temperatures. This significantly reduces the phenomenon of heat conduction from the hot end to the cold end of the exchanger, via the closing bars in particular, and known as longitudinal conduction or longitudinal conduction heat leakage, which is a problem for relatively short exchangers and therefore with a hot end close to the cold end.

The use of titanium or titanium alloys means that exchangers can be shorter, more compact and easier to ship. In particular, the exchanger plates 2 have a length, measured parallel to the longitudinal direction z, of less than or equal to 1 m, preferably between 0.1 and 0.8 m. In one embodiment, the exchanger plates 2 have a width, measured parallel to the lateral direction x, of less than or equal to 0.1 m, preferably between 0.02 and 0.08 m.

In one embodiment, the thickness of the plates 2 ranges from 0.05 to 0.4 mm.

In one embodiment, the exchanger comprises a stack of a plurality of plates 2, the stack having a height, measured parallel to the stacking direction y, of between 0.01 m and 0.05 m.

In one embodiment, all the plates 2 and heat exchange structures 8 are made of titanium or a titanium alloy.

Preferably, the inlet or outlet manifolds 4, 7 are also made in whole or in part of titanium or a titanium alloy. Even more preferably, all the components of the exchanger are made of titanium or a titanium alloy.

By "exchanger components" we mean in particular the primary parts forming the exchanger body, in particular the heat exchange structures, plates, closing bars, as well as the fluid inlet or outlet manifolds assembled to said body.

The titanium alloy preferably comprises at least 50% by weight of titanium, more preferably at least 90% by weight of titanium, and even more preferably at least 95% by weight of titanium. In particular, the titanium alloy may comprise titanium and at least one component selected from carbon, iron, vanadium, nitrogen, oxygen, hydrogen.

In a particular embodiment, the titanium alloy may comprise 0 to 0.08% carbon, 0 to 0.05% nitrogen, 0 to 0.4% oxygen, 0 to 0.015% hydrogen and the balance titanium.

In another particular embodiment, the titanium alloy may comprise 0 to 0.1% carbon, 0 to 0.05% nitrogen, 0 to 0.2% oxygen, 0 to 0.01% hydrogen, 5.5 to 6.75% aluminum, 3.5 to 4.5% vanadium, 0 to 0.4% iron and the balance titanium.

According to another particular embodiment, the titanium alloy may comprise from 0 to 0.08% carbon, from 0 to 0.05% nitrogen, from 0 to 0.13% oxygen, from 0 to 0.012% hydrogen, from 5.5 to 6.5% aluminum, from 3.5 to 4.5% vanadium, from 0 to 0.25% iron and the balance titanium.

In one embodiment, the plates 2 and heat exchange structures 8 are brazed together using a brazing agent comprising a eutectic alloy, preferably a binary copper-silver (CuAg) eutectic alloy. When a brazing agent comprising exclusively a eutectic alloy. For example, the eutectic alloy may comprise 25% by weight of copper and 75% by weight of silver without any other metal or compound. The use of a eutectic alloy makes it possible to limit the temperature required for the brazing operation, and therefore to limit the thermal and mechanical stresses on the heat exchanger components. The brazing agent can take the form of a coating deposited on the surfaces of the plates 2 and/or exchange structures 18, or of one or more strips arranged between the surfaces of the plates 2 and/or exchange structures 8 to be joined.

In one embodiment, some or all of the heat exchanger components, in particular the heat exchange structures 8 and/or the plates 2 and/or the closing bars 6, have a surface coating made of a material other than nickel, a nickel alloy or the brazing agent, in particular a material comprising nickel, preferably pure nickel or an alloy comprising at least 90% or even at least 95% nickel by weight. The surface coating is configured to limit dissolution of the base metal forming the exchanger components during brazing. This limits interaction between the brazing agent and the base metal of the exchanger components, so as to form as few brittle intermetallic phases as possible, thereby increasing the mechanical strength of the exchanger.

Preferably, the heat exchange structures are coated before they are brazed to the plates 2. Preferably at least 90%, even more preferably at least 95%, even more preferably at least 98% of the surface area of the exchange structures 8 is coated.

[Fig. 2] shows an example of a design in which the heat exchange structures 8 are in the form of corrugated products comprising at least one corrugation with wave crests 121 and wave bases 122 connected alternately by fins 123, also known as wave legs. The fins 123 follow one another along a corrugation direction D which is parallel to the plates 2 and, in the illustrated example, orthogonal to the longitudinal direction z.

In operation, the fluid flowing through passage 3 is in an indirect heat exchange relationship via a plate 2, which forms a primary exchange surface, with another fluid flowing through an adjacent passage 3. The fins 123 form secondary exchange surfaces that intensify heat exchange between the fluids, as well as stiffening the exchange passages by acting as spacers.

Structures 8 can also take on other particular shapes defined according to the desired fluid flow characteristics. More generally, the term "fins" covers blades or other secondary heat exchange surfaces, which extend between the primary heat exchange surfaces, i.e. the exchanger plates, in the exchanger passages.

In the embodiment according to [Fig. 2], the channels defined between each pair of consecutive fins 123 have an overall rectangular cross-sectional shape, with the fins extending generally parallel to the longitudinal direction z and parallel to the stacking direction y. It is also conceivable that the fins 123 form an angle of inclination with the y direction.

It should be noted that as a heat exchange structure 8 of the corrugated product type, the various types of waves usually used in plate-fin exchangers can be used, namely straight waves, partially offset waves (of the "serrated" type), waves with waves or herringbones (of the "herringbone" type), perforated or not.

Preferably, heat exchange structure 8 has a height h, corresponding substantially to the height of the passage in which it is arranged, of between 1 and 3 mm. The heat exchange structure 8 preferably has a thickness e of less than 0.15 mm, preferably ranging from 0.03 to 0.1 mm. This makes the exchanger more compact and/or reduces its weight. It should be noted that the thickness of a heat exchanger structure of the corrugated product type refers to the thickness of the flat product from which the corrugated product is formed. This thickness corresponds to the thickness of the wave legs, wave crests and wave bases once the corrugated product has been formed.

In one embodiment, heat exchanger structure 8 has at least 40 fins per inch or fins per inch (1 inch = 2.54 centimeters), preferably a fin density of at most 70 fins per inch or fins per inch (1 inch = 2.54 centimeters). Since titanium or titanium alloys have a lower density than aluminum, higher fin densities can be used without significantly increasing the weight of the heat exchanger. As in the example in [Fig. 2], the fins 123 are preferably arranged periodically with a pitch p between two successive fins. The fin density n, i.e. the number of fins per unit length, is expressed by the relationship n=1/p.

In one embodiment, the passages 3 are delimited by closing bars 6, which can be square, rectangular or U-shaped in cross-section. Closing bars 6 with a U-shaped cross-section reinforce the exchanger mechanically and limit wave sagging during the temperature brazing operation. Indeed, in order to obtain high-quality, i.e. continuous brazed joints, it is imperative to apply a load to the assembly during brazing. Closing bars also serve to isolate the fluids contained in the exchanger from the outside atmosphere. The use of closing bars 6 with a U-shaped cross-section increases the cross-sectional area for the fluid flowing through the exchanger passages, thanks to the extra volume freed up in the hollow of the U, and helps to minimize the size of the exchanger.

Preferably, all or some of the bars 6 are arranged so that the hollow of the U of the bars 6 faces the inside of the exchanger passages.

The hollow of the U may be oriented towards the face of one of the plates located on either side of a bar.

It should be noted that the closing bars 6 can also be formed in whole or in part from titanium or a titanium alloy. The bars 6 can also be brazed together using a brazing agent comprising a eutectic copper-silver alloy.

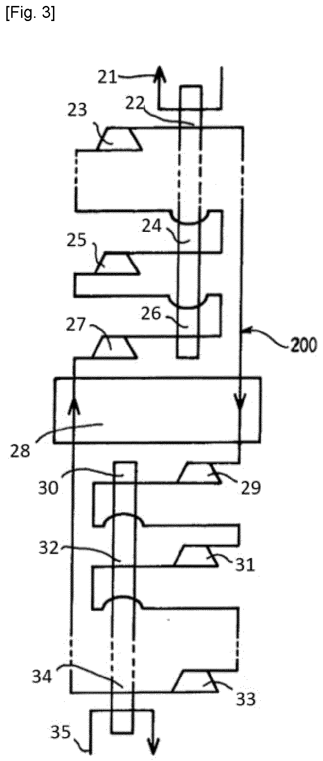

[Fig. 3] shows an embodiment in which at least one heat exchanger according to the invention is integrated into a cryogenic refrigeration device of the type using a Brayton cycle. These refrigeration devices are generally used for the reliquefaction of methane vapors or the liquefaction of hydrogen, or to cool superconducting elements. They can also be used on board ships or satellites. The integration of one or more heat exchangers according to the invention has the advantage of reducing the mass and dimensions of refrigeration devices. Referring to the embodiment shown in [Fig. 3], the refrigeration device according to the invention is designed to transfer heat from a cold source 35 at cryogenic temperature to a hot source 21, at room temperature for example.

The cold source 35 can be, for example, liquid nitrogen to be cooled and the hot source 21 water or air. To achieve this heat transfer, the refrigeration device illustrated in [Fig. 3] uses a working circuit 200 of a working fluid comprising the components listed below.

The 200 circuit comprises at least two centrifugal compressors 23, 25, 27 arranged in series and operating at ambient temperature. The circuit 200 comprises a number of heat exchangers 22, 24, 26 operating at ambient temperature, each located at the outlet of a compressor 23, 25, 27. The temperatures of the working fluid at the inlet and outlet of each compression stage (i.e. at the inlet and outlet of each compressor 23, 25, 27) are maintained at a substantially identical level by the heat exchanges.

The inlet and outlet temperatures of each compression stage are essentially the same.

The heat exchangers 22, 24, 26 may be separate or may consist of separate portions of the same exchanger in heat exchange with the hot source 21. At least one of the exchangers 26, 24, 22 for cooling the compressed working fluid is designed in accordance with the invention.

Downstream of the compression portion comprising the compressors in series, the refrigerator includes a heat exchanger 28, preferably of the counter-current plate type, separating the ambient-temperature elements (in the upper part of circuit 200 shown in [Fig. 3]) from the cryogenic-temperature elements (in the lower part of circuit 200). The fluid is cooled. The gas is cooled from ambient to cryogenic temperature by counter-current exchange with the same cryogenic-temperature working fluid returning from the expansion section after heat exchange with cold source 35. Downstream of this cooling section, formed by the plate exchanger 28, the circuit includes one or more expansion turbines 29, 31, 33, preferably of the centripetal type, arranged in series. The turbines 29, 31, 33 operate at cryogenic temperatures, and the inlet and outlet temperatures of each expansion stage (turbine inlet and outlet) are kept substantially identical by one or more cryogenic heat exchangers 30, 32, 34 arranged at the outlet of the turbine(s). This arrangement enables isothermal expansion to be approximated. The inlet and outlet temperatures of each expansion stage are substantially the same.

These reheating exchangers 30, 32, 34 may be separate or may consist of separate portions of the same exchanger in heat exchange with the cold source 35. At least one of the exchangers 30, 32, 34 for reheating the expanded working fluid conforms to the invention.

Downstream of the expansion section and the heat exchange with the cold source 35, the working fluid again exchanges heat with the plate heat exchanger 28. The fluid exchanges heat in exchanger 8 in counter-current to its passage after the compression section. After reheating, the fluid returns to the compression section and can start a new cycle.

The refrigerator preferably uses a gas-phase fluid circulating in a closed circuit as the working fluid. This may be a pure gas or a mixture of pure gases. Gases best suited to this technology include helium, neon, nitrogen, oxygen and argon. Carbon monoxide and methane, or any other fluid with a gaseous phase at cold-source temperature, can also be used.

In one embodiment, the refrigerator is designed and controlled in such a way as to achieve a fluid working cycle approximating the Ericsson cycle, i.e. isothermal compression, isobaric cooling, isothermal expansion and isobaric heating.

In another embodiment, the refrigerator is designed and controlled in such a way as to achieve a fluid working cycle approximating the Brayton cycle, i.e. adiabatic compression, isobaric cooling, adiabatic expansion and isobaric heating.

As an advantageous feature, the refrigerator uses several high-speed motors 70 to drive at least the compressors 23, 25, 27 (i.e. to drive the compressor wheels). High-speed motors are usually defined as motors whose rotational speed enables direct coupling with a centrifugal compression stage or a centripetal expansion stage. High-speed motors preferably use magnetic or dynamic gas bearings. A high-speed motor typically rotates at a speed of 10,000 rpm or several tens of thousands of rpm. A low-speed motor tends to run at a few thousand rpm.

## Claims

1. A plate-fin type heat exchanger configured to bring into heat exchange relationship at least one refrigerant fluid and at least one heat-originating fluid, said exchanger comprising a plurality of plates (2) arranged parallel to each other and to a longitudinal direction (z) so as to define between said plates (2) a plurality of passages (3) adapted for the flow of the refrigerant fluid or the heat-originating fluid along the longitudinal direction (z), heat exchange structures (8) with fins (123) being arranged within at least part of the passages (3), the plates (2) and the heat exchange structures (8) are formed wholly or partly of titanium or a titanium alloy and **characterized in that** the plates (2) and the heat exchange structures (8) are assembled by brazing by means of a brazing agent comprising a eutectic alloy.

2. Heat exchanger according to claim 1, **characterized in that** all the plates (2) and heat exchange structures (8) are made of titanium or a titanium alloy.

3. Heat exchanger according to one of claims 1 or 2, **characterized in that** it comprises inlet or outlet manifolds (4, 7) configured to introduce or discharge refrigerant or heat-originating fluid into or from the passages (3), said inlet or outlet manifolds (4, 7) being formed wholly or partly of titanium or a titanium alloy.

4. Heat exchanger according to one of the preceding claims, **characterized in that** the titanium alloy comprises at least 50% by weight of titanium, preferably at least 90% by weight of titanium, and even more preferably at least 95% by weight of titanium.

5. Heat exchanger according to one of the preceding claims, **characterized in that** the heat exchange structures (8) and the plates (2) are brazed together by means of a brazing agent, the heat exchange structures (8) and/or the plates (2) having in whole or in part a surface coating of a material other than nickel, a nickel alloy or the brazing agent, in particular of a material comprising nickel.

6. Heat exchanger according to one of the preceding claims, **characterized in that** the brazing agent comprises a eutectic copper-silver alloy.

7. Heat exchanger according to one of the preceding claims, **characterized in that** the heat exchange structures (8) are in the form of corrugated products comprising at least one corrugation with wave crests (121) and wave bases (122) arranged against the plates (2) and connected alternately by fins (123), said fins (123) following one another in a corrugation direction (D) of the heat exchange structures (8).

8. Heat exchanger according to claim 7, **characterized in that** said at least one corrugation has a fin density, defined as the number of fins per unit length measured along the corrugation direction (D), of at least 30 fins per inch or fins per inch (1 inch=2,54 centimeters), preferably a fin density of at most 80 fins per inch (1 inch=2.54 centimeters), even more preferably a fin density of between 40 and 70 fins per inch (1 inch=2.54 centimeters).

9. Heat exchanger according to one of the preceding claims, **characterized in that** the heat exchange structures (8) have a thickness ranging from 0.03 to 0.1 mm.

10. Heat exchanger according to one of the preceding claims, **characterized in that** the passages (3) have a height ranging from 1 to 3 mm, said height being defined as the distance between two adjacent plates (2) measured orthogonally to the plates (2).

11. Heat exchanger according to one of the preceding claims, **characterized in that** the plates (2) have a thickness ranging from 0.05 to 0.4 mm.

12. Heat exchanger according to one of the preceding claims, **characterized in that** it comprises a body formed by the stack of plates (2), said body having a length, measured parallel to the longitudinal direction (z), less than or equal to 1 m, preferably between 0.1 and 0.8 m and/or said body having a width, measured parallel to the lateral direction (x), of less than or equal to 0.1 m, preferably between 0.02 and 0.08 m, and/or said body has a height, measured orthogonally to the longitudinal (z) and lateral (x) directions, of less than 0.06 m, preferably between 0.01 and 0.05 m.

13. Heat exchanger according to one of the preceding claims, **characterized in that** the passages (3) are delimited by closing bars (6) arranged between the plates (2) and formed wholly or partly of titanium or a titanium alloy, in particular the closing bars (6) have a square, rectangular or U-shaped cross-section.

14. An air separation unit or hydrogen liquefaction plant comprising at least one heat exchanger according to one of claims 1 to 13, the heat exchanger comprising inlet or outlet manifolds for distributing or discharging into or from exchanger passages liquid oxygen as refrigerant and gaseous nitrogen as heat transfer medium.

15. Air separation unit for transferring heat from a cold source (35) to a hot source (21) via a working fluid circulating in a closed working circuit (200), the working circuit (200) comprising in series : a substantially isothermal working fluid compression portion, a substantially isobaric working fluid cooling portion, a substantially isothermal working fluid expansion portion and a substantially isobaric working fluid heating portion, the compression portion of the working circuit (200) comprising at least two compressors (27, 25, 23) arranged in series and at least one exchanger (26, 24, 22) for cooling the compressed working fluid arranged at the outlet of each compressor (27, 25, 23), the expansion portion of the working circuit (200) comprising at least one expansion turbine (29, 31, 33) and at least one exchanger (30, 32, 34) for reheating the expanded working fluid, wherein the exchanger (26, 24, 22) for cooling the compressed working fluid and/or the exchanger (30, 32, 34) for reheating the expanded working fluid is as defined in one of claims 1 to 13 and comprises inlet or outlet manifolds for distributing or discharging the compressed working fluid as a heat-generating fluid or the expanded working fluid as a refrigerant into or from passages in the exchanger.

16. Use of a heat exchanger according to one of claims 1 to 13 wherein said at least one heat transfer fluid and/or said at least one refrigerant comprises at least one of: neon, krypton, xenon, nitrogen, argon, oxygen, hydrogen, helium, carbon monoxide, carbon dioxide, methane.

## Patentansprüche

1. Ein Platten-Rippen-Wärmetauscher, der so konfiguriert ist, dass er mindestens ein Kältemittel-Fluid und mindestens ein wärmeerzeugendes Fluid in Wärmeaustauschbeziehung bringt, wobei der Wärmetauscher eine Vielzahl von Platten (2) umfasst, die parallel zueinander und zu einer Längsrichtung (z) angeordnet sind, um zwischen den Platten (2) eine Vielzahl von Kanälen (3) zu definieren, die für den Fluss des Kältemittel-Fluids oder des wärmeerzeugenden Fluids entlang der Längsrichtung (z) ausgelegt sind, wobei Wärmeaustauschstrukturen (8) mit Rippen (123) innerhalb mindestens eines Teils der Kanäle (3) angeordnet sind, wobei die Platten (2) und die Wärmeaustauschstrukturen (8) ganz oder teilweise aus Titan oder einer Titanlegierung gebildet sind, und **dadurch gekennzeichnet, dass** die Platten (2) und die Wärmeaustauschstrukturen (8) durch Löten mittels eines Lötmittels, das eine eutektische Legierung umfasst, zusammengefügt sind.

2. Wärmetauscher nach Anspruch 1, **dadurch gekennzeichnet, dass** alle Platten (2) und Wärmeaustauschstrukturen (8) aus Titan oder einer Titanlegierung hergestellt sind.

3. Wärmetauscher nach einem der Ansprüche 1 oder 2, **dadurch gekennzeichnet, dass** er Einlass- oder Auslassverteiler (4, 7) umfasst, die konfiguriert sind, um Kältemittel- oder wärmeerzeugendes Fluid in die oder aus den Kanälen (3) einzuleiten oder abzuführen, wobei die Einlass- oder Auslassverteiler (4, 7) ganz oder teilweise aus Titan oder einer Titanlegierung gebildet sind.

4. Wärmetauscher nach einem der vorhergehenden Ansprüche, **dadurch gekennzeichnet, dass** die Titanlegierung mindestens 50 Gew.-% Titan, vorzugsweise mindestens 90 Gew.-% Titan und noch bevorzugter mindestens 95 Gew.-% Titan umfasst.

5. Wärmetauscher nach einem der vorhergehenden Ansprüche, **dadurch gekennzeichnet, dass** die Wärmeaustauschstrukturen (8) und die Platten (2) mittels eines Lötmittels zusammengelötet sind, wobei die Wärmeaustauschstrukturen (8) und/oder die Platten (2) ganz oder teilweise eine Oberflächenbeschichtung aus einem anderen Material als Nickel, einer Nickellegierung oder dem Lötmittel, insbesondere aus einem Material, das Nickel umfasst, aufweisen.

6. Wärmetauscher nach einem der vorhergehenden Ansprüche, **dadurch gekennzeichnet, dass** das Lötmittel eine eutektische Kupfer-Silber-Legierung umfasst.

7. Wärmetauscher nach einem der vorhergehenden Ansprüche, **dadurch gekennzeichnet, dass** die Wärmeaustauschstrukturen (8) in Form von gewellten Produkten vorliegen, die mindestens eine Wellung mit Wellenbergen (121) und Wellentälern (122) umfassen, die an den Platten (2) anliegen und abwechselnd durch Rippen (123) verbunden sind, wobei die Rippen (123) in einer Wellungsrichtung (D) der Wärmeaustauschstrukturen (8) aufeinander folgen.

8. Wärmetauscher nach Anspruch 7, **dadurch gekennzeichnet, dass** die mindestens eine Wellung eine Rippendichte, definiert als die Anzahl der Rippen pro Längeneinheit gemessen entlang der Wellungsrichtung (D), von mindestens 30 Rippen pro Zoll oder Rippen pro Zoll (1 Zoll = 2,54 Zentimeter), vorzugsweise eine Rippendichte von höchstens 80 Rippen pro Zoll (1 Zoll = 2,54 Zentimeter), noch bevorzugter eine Rippendichte zwischen 40 und 70 Rippen pro Zoll (1 Zoll = 2,54 Zentimeter) aufweist.

9. Wärmetauscher nach einem der vorhergehenden Ansprüche, **dadurch gekennzeichnet, dass** die Wärmeaustauschstrukturen (8) eine Dicke im Bereich von 0,03 bis 0,1 mm aufweisen.

10. Wärmetauscher nach einem der vorhergehenden Ansprüche, **dadurch gekennzeichnet, dass** die Kanäle (3) eine Höhe im Bereich von 1 bis 3 mm aufweisen, wobei die Höhe als der Abstand zwischen zwei benachbarten Platten (2) gemessen orthogonal zu den Platten (2) definiert ist.

11. Wärmetauscher nach einem der vorhergehenden Ansprüche, **dadurch gekennzeichnet, dass** die Platten (2) eine Dicke im Bereich von 0,05 bis 0,4 mm aufweisen.

12. Wärmetauscher nach einem der vorhergehenden Ansprüche, **dadurch gekennzeichnet, dass** er einen durch den Stapel von Platten (2) gebildeten Körper umfasst, wobei der Körper eine Länge, gemessen parallel zur Längsrichtung (z), von weniger als oder gleich 1 m, vorzugsweise zwischen 0,1 und 0,8 m, aufweist und/oder der Körper eine Breite, gemessen parallel zur Querrichtung (x), von weniger als oder gleich 0,1 m, vorzugsweise zwischen 0,02 und 0,08 m, aufweist, und/oder der Körper eine Höhe, gemessen orthogonal zur Längs- (z) und Querrichtung (x), von weniger als 0,06 m, vorzugsweise zwischen 0,01 und 0,05 m, aufweist.

13. Wärmetauscher nach einem der vorhergehenden Ansprüche, **dadurch gekennzeichnet, dass** die Kanäle (3) durch Abschlussleisten (6) begrenzt sind, die zwischen den Platten (2) angeordnet und ganz oder teilweise aus Titan oder einer Titanlegierung gebildet sind, insbesondere haben die Abschlussleisten (6) einen quadratischen, rechteckigen oder U-förmigen Querschnitt.

14. Eine Luftzerlegungsanlage oder Wasserstoffverflüssigungsanlage, die mindestens einen Wärmetauscher nach einem der Ansprüche 1 bis 13 umfasst, wobei der Wärmetauscher Einlass- oder Auslassverteiler zum Verteilen oder Abführen von flüssigem Sauerstoff als Kältemittel und gasförmigem Stickstoff als Wärmeübertragungsmedium in oder aus den Wärmetauscherkanälen umfasst.

15. Luftzerlegungsanlage zur Wärmeübertragung von einer kalten Quelle (35) zu einer heißen Quelle (21) über ein in einem geschlossenen Arbeitskreislauf (200) zirkulierendes Arbeitsfluid, wobei der Arbeitskreislauf (200) in Reihe umfasst: einen im Wesentlichen isothermen Arbeitsfluid-Verdichtungsabschnitt, einen im Wesentlichen isobaren Arbeitsfluid-Kühlabschnitt, einen im Wesentlichen isothermen Arbeitsfluid-Expansionsabschnitt und einen im Wesentlichen isobaren Arbeitsfluid-Erhitzungsabschnitt, wobei der Verdichtungsabschnitt des Arbeitskreislaufs (200) mindestens zwei in Reihe geschaltete Kompressoren (27, 25, 23) und mindestens einen Wärmetauscher (26, 24, 22) zur Kühlung des verdichteten Arbeitsfluids umfasst, der am Auslass jedes Kompressors (27, 25, 23) angeordnet ist, der Expansionsabschnitt des Arbeitskreislaufs (200) mindestens eine Expansionsturbine (29, 31, 33) und mindestens einen Wärmetauscher (30, 32, 34) zur Wiedererhitzung des expandierten Arbeitsfluids umfasst, wobei der Wärmetauscher (26, 24, 22) zur Kühlung des verdichteten Arbeitsfluids und/oder der Wärmetauscher (30, 32, 34) zur Wiedererhitzung des expandierten Arbeitsfluids wie in einem der Ansprüche 1 bis 13 definiert ist und Einlass- oder Auslassverteiler zur Verteilung oder Abführung des verdichteten Arbeitsfluids als wärmeerzeugendes Fluid oder des expandierten Arbeitsfluids als Kältemittel in oder aus Kanälen im Wärmetauscher umfasst.

16. Verwendung eines Wärmetauschers nach einem der Ansprüche 1 bis 13, wobei das mindestens eine Wärmeübertragungsfluid und/oder das mindestens eine Kältemittel mindestens eines der folgenden Elemente umfasst: Neon, Krypton, Xenon, Stickstoff, Argon, Sauerstoff, Wasserstoff, Helium, Kohlenmonoxid, Kohlendioxid, Methan.

## Revendications

1. Un échangeur de chaleur de type à plaques et ailettes configuré pour mettre en relation d'échange de chaleur au moins un fluide réfrigérant et au moins un fluide calorigène, ledit échangeur comprenant une pluralité de plaques (2) agencées parallèlement les unes aux autres et à une direction longitudinale (z) de manière à définir entre lesdites plaques (2) une pluralité de passages (3) adaptés à l'écoulement du fluide réfrigérant ou du fluide calorigène le long de la direction longitudinale (z), des structures d'échange de chaleur (8) avec des ailettes (123) étant agencées à l'intérieur d'au moins une partie des passages (3), les plaques (2) et les structures d'échange de chaleur (8) étant formées entièrement ou partiellement de titane ou d'un alliage de titane et **caractérisé en ce que** les plaques (2) et les structures d'échange de chaleur (8) sont assemblées par brasage au moyen d'un agent de brasage comprenant un alliage eutectique.

2. Échangeur de chaleur selon la revendication 1, **caractérisé en ce que** toutes les plaques (2) et les structures d'échange de chaleur (8) sont en titane ou en alliage de titane.

3. Échangeur de chaleur selon l'une des revendications 1 ou 2, **caractérisé en ce qu'**il comprend des collecteurs d'entrée ou de sortie (4, 7) configurés pour introduire ou évacuer le fluide réfrigérant ou calorigène dans ou depuis les passages (3), lesdits collecteurs d'entrée ou de sortie (4, 7) étant formés entièrement ou partiellement de titane ou d'un alliage de titane.

4. Échangeur de chaleur selon l'une des revendications précédentes, **caractérisé en ce que** l'alliage de titane comprend au moins 50 % en poids de titane, de préférence au moins 90 % en poids de titane, et encore plus préférentiellement au moins 95 % en poids de titane.

5. Échangeur de chaleur selon l'une des revendications précédentes, **caractérisé en ce que** les structures d'échange de chaleur (8) et les plaques (2) sont brasées ensemble au moyen d'un agent de brasage, les structures d'échange de chaleur (8) et/ou les plaques (2) ayant en totalité ou en partie un revêtement de surface d'un matériau autre que le nickel, un alliage de nickel ou l'agent de brasage, en particulier d'un matériau comprenant du nickel.

6. Échangeur de chaleur selon l'une des revendications précédentes, **caractérisé en ce que** l'agent de brasage comprend un alliage eutectique cuivre-argent.

7. Échangeur de chaleur selon l'une des revendications précédentes, **caractérisé en ce que** les structures d'échange de chaleur (8) se présentent sous la forme de produits ondulés comprenant au moins une ondulation avec des crêtes d'onde (121) et des bases d'onde (122) agencées contre les plaques (2) et reliées alternativement par des ailettes (123), lesdites ailettes (123) se succédant dans une direction d'ondulation (D) des structures d'échange de chaleur (8).

8. Échangeur de chaleur selon la revendication 7, **caractérisé en ce que** ladite au moins une ondulation a une densité d'ailettes, définie comme le nombre d'ailettes par unité de longueur mesurée le long de la direction d'ondulation (D), d'au moins 30 ailettes par pouce ou ailettes par pouce (1 pouce = 2,54 centimètres), de préférence une densité d'ailettes d'au plus 80 ailettes par pouce (1 pouce = 2,54 centimètres), encore plus préférentiellement une densité d'ailettes comprise entre 40 et 70 ailettes par pouce (1 pouce = 2,54 centimètres).

9. Échangeur de chaleur selon l'une des revendications précédentes, **caractérisé en ce que** les structures d'échange de chaleur (8) ont une épaisseur allant de 0,03 à 0,1 mm.

10. Échangeur de chaleur selon l'une des revendications précédentes, **caractérisé en ce que** les passages (3) ont une hauteur allant de 1 à 3 mm, ladite hauteur étant définie comme la distance entre deux plaques adjacentes (2) mesurée orthogonalement aux plaques (2).

11. Échangeur de chaleur selon l'une des revendications précédentes, **caractérisé en ce que** les plaques (2) ont une épaisseur allant de 0,05 à 0,4 mm.

12. Échangeur de chaleur selon l'une des revendications précédentes, **caractérisé en ce qu'**il comprend un corps formé par l'empilement de plaques (2), ledit corps ayant une longueur, mesurée parallèlement à la direction longitudinale (z), inférieure ou égale à 1 m, de préférence entre 0,1 et 0,8 m et/ou ledit corps ayant une largeur, mesurée parallèlement à la direction latérale (x), inférieure ou égale à 0,1 m, de préférence entre 0,02 et 0,08 m, et/ou ledit corps a une hauteur, mesurée orthogonalement aux directions longitudinale (z) et latérale (x), inférieure à 0,06 m, de préférence entre 0,01 et 0,05 m.

13. Échangeur de chaleur selon l'une des revendications précédentes, **caractérisé en ce que** les passages (3) sont délimités par des barres de fermeture (6) agencées entre les plaques (2) et formées entièrement ou partiellement de titane ou d'un alliage de titane, en particulier les barres de fermeture (6) ont une section transversale carrée, rectangulaire ou en forme de U.

14. Une unité de séparation d'air ou une installation de liquéfaction d'hydrogène comprenant au moins un échangeur de chaleur selon l'une des revendications 1 à 13, l'échangeur de chaleur comprenant des collecteurs d'entrée ou de sortie pour distribuer ou évacuer dans ou depuis les passages de l'échangeur de l'oxygène liquide comme réfrigérant et de l'azote gazeux comme fluide caloporteur.

15. Unité de séparation d'air pour transférer de la chaleur d'une source froide (35) à une source chaude (21) via un fluide de travail circulant dans un circuit de travail fermé (200), le circuit de travail (200) comprenant en série : une partie de compression de fluide de travail sensiblement isotherme, une partie de refroidissement de fluide de travail sensiblement isobare, une partie d'expansion de fluide de travail sensiblement isotherme et une partie de chauffage de fluide de travail sensiblement isobare, la partie de compression du circuit de travail (200) comprenant au moins deux compresseurs (27, 25, 23) agencés en série et au moins un échangeur (26, 24, 22) pour refroidir le fluide de travail comprimé agencé à la sortie de chaque compresseur (27, 25, 23), la partie d'expansion du circuit de travail (200) comprenant au moins une turbine d'expansion (29, 31, 33) et au moins un échangeur (30, 32, 34) pour réchauffer le fluide de travail détendu, dans laquelle l'échangeur (26, 24, 22) pour refroidir le fluide de travail comprimé et/ou l'échangeur (30, 32, 34) pour réchauffer le fluide de travail détendu est tel que défini dans l'une des revendications 1 à 13 et comprend des collecteurs d'entrée ou de sortie pour distribuer ou évacuer le fluide de travail comprimé comme fluide calorigène ou le fluide de travail détendu comme réfrigérant dans ou depuis des passages dans l'échangeur.

16. Utilisation d'un échangeur de chaleur selon l'une des revendications 1 à 13, dans laquelle ledit au moins un fluide caloporteur et/ou ledit au moins un réfrigérant comprend au moins l'un des éléments suivants : néon, krypton, xénon, azote, argon, oxygène, hydrogène, hélium, monoxyde de carbone, dioxyde de carbone, méthane.
